# FASCICULE DE BREVET EUROPEEN

(11) **EP 2 794 131 B1**
(45) Date de publication et mention de la délivrance du brevet: **21.10.2015**
(21) Numéro de dépôt: 12781388.9
(22) Date de dépôt: 12.10.2012
(51) Int. Cl.: B07C 3/00, B65H 31/06

(54) **DISPOSITIF ET PROCÉDÉ D'EMPILAGE ET DE CHARGEMENT D'OBJETS PLATS SUR CHANT DANS UN BAC MULTI-COMPARTIMENTS, MACHINE DE TRI POSTAL ET PROCÉDÉ DE TRI POSTAL**
VORRICHTUNG UND VERFAHREN ZUM STAPELN UND LADEN VON FLACHEN GEGENSTÄNDEN AUF EINER KANTE IN EINER SCHALE MIT MEHREREN FÄCHERN, POSTSORTIERMASCHINE UND POSTSORTIERVERFAHREN
DEVICE AND METHOD FOR STACKING AND LOADING FLAT OBJECTS ON EDGE INTO A TRAY COMPRISING MULTIPLE COMPARTMENTS, MAIL-SORTING MACHINE, AND MAIL-SORTING METHOD

(30) Priorité: 22.12.2011 FR 1162315
(43) Date de publication de la demande: 29.10.2014
(73) Titulaire: Solystic, 92220 Bagneux (FR)
(72) Inventeur: HUGUES, Damien, F-26120 UPIE (FR)
(74) Mandataire: Prugneau, Philippe
(86) Numéro de dépôt international: PCT/FR2012/052334
(87) Numéro de publication internationale: WO 2013/093251

(56) Documents cités:
- WO-A1-2008/003754
- FR-A1- 2 646 620

## Description

### Domaine technique

L'invention concerne de façon générale un dispositif d'empilage et de chargement automatique d'objets plats sur chant dans un bac multi-compartiments comportant une plaque de fond recevant le chant des objets plats et traversée par au moins deux fenêtres débouchant respectivement dans des premier et second compartiments du bac multi-compartiments, le dispositif d'empilage et de chargement automatique comportant au moins une surface d'accueil apte à recevoir au moins un bac multi-compartiments à charger, une zone d'empilage prévue au-dessus de la surface d'accueil et apte à accueillir les objets plats au cours de leur empilage, un empileur apte à empiler les objets plats sur chant dans la zone d'empilage.

L'invention concerne également une machine de tri d'objets plats comportant au moins un dépileur, des moyens de convoyage, des sorties de tri dans lesquelles les objets plats sont destinés à être répartis selon un plan de tri prédéterminé, un dispositif d'empilage et de chargement automatique d'objets plats sur chant au niveau des sorties de tri.

L'invention concerne également un procédé d'empilage et de chargement automatique d'objets plats sur chant dans un bac multi-compartiments pourvu d'une plaque de fond recevant le chant des objets plats et d'une ouverture opposée à la plaque de fond et autorisant le chargement des objets plats dans le bac multi-compartiments, la plaque de fond comportant au moins une première et une seconde fenêtres débouchant respectivement dans un premier et un second compartiments.

L'invention concerne enfin un procédé de tri postal au cours duquel on réalise au moins des étapes de déchargement d'objets plats empilés sur chant d'un bac multi-compartiments, de dépilage des objets plats, de tri des objets plats, d'empilage des objets plats, et de chargement des objets plats dans au moins un bac multi-compartiments.

Au sens de l'invention, un objet plat désigne notamment, mais non exclusivement, un envoi postal. Les envois postaux, susceptibles d'être empilés et chargés grâce au dispositif de l'invention, peuvent présenter des dimensions variables, mais également des caractéristiques mécaniques variables, en particulier en ce qui concerne leur rigidité. Ces envois postaux peuvent être, entre autres, une lettre simple, un magazine, une enveloppe avec ou sans fenêtre, un journal, ou encore un catalogue présenté dans une enveloppe en matière plastique ou en papier, avec ou sans soufflet.

### Technique antérieure

Les dispositifs d'empilage sont couramment utilisés, notamment dans le domaine du tri postal. De manière connue, ce type de dispositif d'empilage définit une zone d'empilage de dimensions variables, apte à recevoir les objets plats convoyés selon une direction longitudinale et empilés les uns contre les autres selon une direction transversale. L'aval de cette zone d'empilage est délimité par une rive de taquage contre laquelle les objets plats viennent en butée. Le premier objet plat de la pile prend appui contre une palette, mobile transversalement sous l'effet de l'accumulation des objets plats. Cette palette mobile est sollicitée par un élément élastique pour exercer sur la pile un effort de compression, permettant le maintien des objets plats dans leur position sur chant. Le dispositif d'empilage comporte un actionneur rotatif mis en mouvement lors de l'arrivée de chaque objet plat en direction de la zone d'empilage.

La Demanderesse a commercialisé, sous la référence «Virgule Equipée» (article n°285590), un dispositif d'empilage dont l'actionneur comprend un moyeu, à partir duquel s'étendent plusieurs couples d'ergots. De plus, les ergots d'un même couple sont disposés de façon symétrique, à 180° l'un par rapport à l'autre En service les ergots créent, de façon périodique, une force de poussée longitudinale, soit directement sur la palette lors de l'arrivée des premiers objets, soit sur la pile en cours de formation.

Ce dispositif d'empilage connu est tout à fait bien adapté dans le cas du traitement de lettres, ce qui est d'ailleurs confirmé par le succès commercial dont il bénéficie. Cependant, il ne permet pas de charger automatiquement les objets plats ainsi empilés sur chant dans un bac multi-compartiments. En particulier, un tel dispositif d'empilage et de chargement ne permet pas de charger automatiquement des objets plats sur chant dans un bac multi-compartiments.

Un dispositif d'empilage selon le préambule de la revendication 1 est connu du document WO-A-2008/003754 ou du document FR-A-2 646 620.

### Exposé de l'invention

Le but de l'invention est de remédier à cet inconvénient en proposant un dispositif de déchargement automatique d'objets plats sur chant dans un bac multi-compartiments, une machine de tri comportant un tel dispositif, un procédé d'empilage et de chargement automatique d'objets plats sur chant dans un bac multi-compartiments et un procédé de tri postal permettant d'automatiser le chargement d'objets plats sur chant dans des bacs multi-compartiments pour fiabiliser ces opérations et améliorer les rendements de traitement des objets plats tout en diminuant les manipulations des objets plats.

A cet effet, l'invention a pour objet un dispositif d'empilage et de chargement automatique d'objets plats sur chant dans un bac multi-compartiments comportant une plaque de fond recevant le chant des objets plats et traversée par au moins deux fenêtres débouchant respectivement dans des premier et second compartiments du bac multi-compartiments, le dispositif d'empilage et de chargement automatique comportant au moins une surface d'accueil apte à recevoir au moins un bac multi-compartiments à charger, une zone d'empilage prévue au-dessus de la surface d'accueil et apte à accueillir les objets plats au cours de leur empilage, un empileur apte à empiler les objets plats sur chant dans la zone d'empilage, caractérisé en ce qu'il comporte au moins un doigt mobile destiné à être en regard de l'une des fenêtres d'un bac multi-compartiments placé sur la surface d'accueil, le doigt mobile étant mobile par rapport à la surface d'accueil et à la zone d'empilage entre une position basse dans laquelle son extrémité libre est en retrait de la surface d'accueil et une position haute dans laquelle son extrémité libre affleure la zone d'empilage et définit une surface d'appui des objets plats apte à servir de support aux objets plats lors de leur empilage, la surface d'accueil étant mobile par rapport au doigt mobile entre une première et une seconde positions dans lesquelles le doigt mobile est destiné à être successivement en regard de la fenêtre du premier compartiment puis de la fenêtre du second compartiment.

L'idée à la base de l'invention est de prévoir un doigt mobile apte à traverser le bac multi-compartiments pour servir de surface d'appui aux objets plats avant, par translation du doigt mobile, de successivement charger les compartiments du bac multi-compartiments. Les objets plats peuvent ainsi être empilés sur chant et chargés automatiquement sur chant dans un bac multi-compartiments.

Le dispositif d'empilage et de chargement automatique selon l'invention peut avantageusement présenter les particularités suivantes :
- le dispositif d'empilage et de chargement automatique peut comporter au moins un détecteur apte à contrôler le seuil d'empilage d'objets plats dans la zone d'empilage et à commander les déplacements du doigt mobile et de la surface d'accueil lorsqu'une valeur de seuil prédéterminée a été atteinte ;
- le dispositif d'empilage et de chargement automatique peut comporter une rangée de doigts mobiles agencés pour se déplacer simultanément entre les positions basse et haute ;
- l'empileur est un actionneur rotatif de type roue à godet et le dispositif d'empilage et de chargement automatique comporte au moins une palette mobile prévue en regard de l'empileur et apte à recevoir l'appui de la face aval du premier objet plat empilé sur la zone d'empilage et à s'éloigner de l'empileur au fur et à mesure de l'empilage des objets plats à l'arrière du premier objet plat ;
- le dispositif d'empilage et de chargement automatique peut comporter des moyens d'approvisionnement automatique du bac multi-compartiments vers la surface d'accueil ;
- le dispositif d'empilage et de chargement automatique peut comporter des moyens de retrait automatique du bac multi-compartiments de la surface d'accueil ;

L'invention a également pour objet une machine de tri d'objets plats comportant au moins un dépileur, des moyens de convoyage, des sorties de tri dans lesquelles les objets plats sont destinés à être répartis selon un plan de tri prédéterminé, un dispositif d'empilage et de chargement des objets plats sur chant au niveau des sorties de tri, caractérisé en ce qu'elle comporte au moins un dispositif d'empilage et de chargement automatique tel que décrit précédemment.

L'invention a aussi pour objet un procédé d'empilage et de chargement automatique d'objets plats sur chant dans un bac multi-compartiments comportant une plaque de fond recevant le chant des objets plats et traversée par au moins deux fenêtres débouchant respectivement dans des premier et second compartiments du bac multi-compartiments, caractérisé en ce qu'il comporte au moins :
- une étape d'approvisionnement au cours de laquelle on place au moins un bac multi-compartiments sur une surface d'accueil de sorte qu'un doigt mobile se trouve en regard de la fenêtre du premier compartiment,
- une première étape d'engagement au cours de laquelle on engage au moins un doigt mobile dans le bac multi-compartiments au travers de la fenêtre du premier compartiment de sorte que son extrémité libre définisse, au-dessus de la surface d'accueil, une surface d'appui apte à recevoir les objets plats empilés sur chant,
- une première étape d'empilage au cours de laquelle on empile les objets plats sur chant sur la surface d'appui,
- une première étape de chargement au cours de laquelle on rétracte le doigt mobile du premier compartiment de sorte que le chant des objets plats repose sur la plaque de fond,
- une étape de décalage au cours de laquelle on déplace le bac multi-compartiments de sorte que le doigt mobile soit en regard de la fenêtre du second compartiment,
- une seconde étape d'engagement au cours de laquelle on engage le même doigt mobile que celui utilisé lors de la première étape d'engagement, au travers de la fenêtre du second compartiment de sorte que son extrémité libre définisse, au-dessus de la surface d'accueil, la même surface d'appui que lors de la première étape d'engagement,
- une seconde étape d'empilage similaire à la première étape d'empilage,
- une seconde étape de chargement au cours de laquelle on rétracte le doigt mobile du second compartiment de sorte que le chant des objets plats repose sur la plaque de fond,
- une étape d'évacuation du bac multi-compartiments de la surface d'accueil.

Au cours du procédé d'empilage et de chargement automatique, avant la mise en oeuvre du procédé d'empilage et de chargement, on peut fixer au moins une valeur de seuil prédéterminée en fonction des dimensions du bac multi-compartiments, et au cours d'au moins l'une des première et seconde étapes d'empilage, on compare le niveau d'empilage d'objets plats avec le seuil d'empilage et, lorsque le niveau d'empilage atteint la valeur de seuil prédéterminée, on commande successivement la première étape de chargement, la seconde étape de chargement et l'étape de décalage.

L'invention a enfin pour objet un procédé de tri postal au cours duquel on réalise au moins des étapes de déchargement d'objets plats empilés sur chant d'un bac multi-compartiments, de dépilage des objets plats, de tri des objets plats, d'empilage des objets plats, et de chargement des objets plats dans au moins un bac multi-compartiments, caractérisé en ce que l'on réalise les étapes d'empilage et de chargement selon le procédé d'empilage et de chargement décrit précédemment.

### Description sommaire des dessins

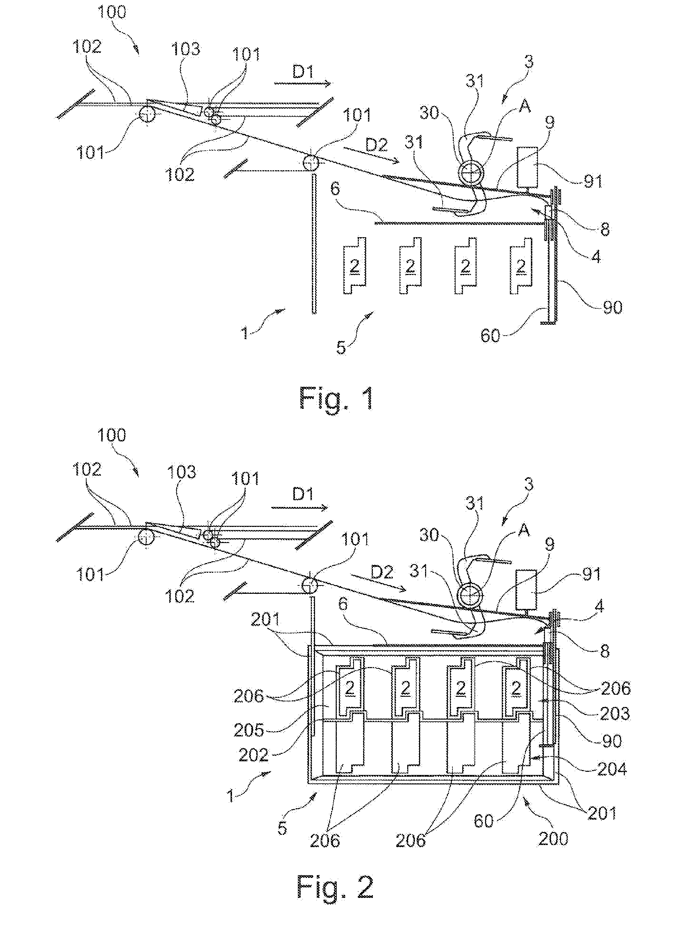

La présente invention sera mieux comprise et d'autres avantages apparaîtront à la lecture de la description détaillée du mode de réalisation pris à titre d'exemple nullement limitatif et illustré par les dessins annexés, dans lesquels les figures 1 à 6 sont des vues schématiques d'une partie d'une machine de tri d'objets plats comportant un dispositif d'empilage selon l'invention, représentée en différentes configurations d'utilisation pour illustrer le procédé d'empilage et de chargement automatique selon l'invention.

### Description des modes de réalisation

En référence aux figures, le dispositif d'empilage et de chargement automatique 1 d'objets plats 10 sur chant dans selon l'invention est par exemple disposé au niveau d'une sortie de tri d'une machine de tri 100. De manière connue, cette machine de tri 100 comporte un châssis fixe (non représenté) portant des poulies de guidage 101 pour des bandes transporteuses 102, assurant le convoyage des objets plats 10. Ces bandes transporteuses 102 définissent ainsi, par exemple, une direction de convoyage principale symbolisée par la flèche D1, et une direction de convoyage secondaire symbolisée par la flèche D2 et guidant les objets plats 10 vers la sortie de tri équipée du dispositif d'empilage et de chargement automatique 1. La machine de tri 100 comporte en outre un volet d'aiguillage 103 prévu à l'intersection entre la direction principale D1 et la direction secondaire D2 et apte à être pivoté automatiquement de sorte à orienter les objets plats 10 vers l'une ou l'autre des directions principale D1 et secondaire D2 selon un plan de tri prédéterminé.

Le dispositif d'empilage et de chargement automatique 1 est destiné à être utilisé avec des bacs multi-compartiments 200 sensiblement identiques entre eux. Chacun de ces bacs multi-compartiments 200 comporte une plaque de fond 205, des panneaux externes 201 et une ou plusieurs cloisons 202 délimitant au moins un premier compartiment 203 et un second compartiment 204 aptes chacun à recevoir des objets plats 10 empilés sur chant, leur chant étant en appui sur la plaque de fond 205. Chaque premier et second compartiment 203, 204 est pourvu d'une rangée de fenêtres 206 traversant la plaque de fond 205 et débouchant respectivement dans le premier compartiment 203, le second compartiment 204. Ces fenêtres 206 se présentent sous la forme de fentes sensiblement identiques entre elles, s'étendant d'un panneau externe 201 en regard de la cloison 202 à la cloison 202 et alignées de sorte que leurs longueurs soient sensiblement perpendiculaires à la cloison 202. Les fenêtres 206 ont chacune globalement une forme de Z comportant deux branches séparées par une tige. Les fenêtres 206 sont aptes à autoriser le passage de doigts mobiles 2 décrits plus loin.

Le dispositif d'empilage et de chargement automatique 1 comporte une surface d'accueil 5 apte à recevoir un bac multi-compartiments 200, un actionneur 3 apte à empiler les objets plats 10 et une zone d'empilage 4 apte à recevoir les objets plats 10 empilés avant leur chargement dans le bac multi-compartiments 200.

L'actionneur 3 est de type roue à godets et est mobile en rotation autour d'un axe A sensiblement perpendiculaire aux directions principale D1 et secondaire D2. Il est placé dans la trajectoire des objets plats 10 qui suivent, avant empilage, la seconde direction D2. L'actionneur 3 comprend un moyeu 30 porté par l'axe A et duquel s'étendent deux ergots 31, incurvés dans un sens opposé à celui de l'arrivée des objets plats 10 selon la direction secondaire D2. Les ergots 31 définissent des fentes aptes à se trouver successivement, selon la rotation de l'actionneur 3, en regard de l'arrivée des objets plats 10 pour les recevoir successivement et les accompagner lors de l'empilage.

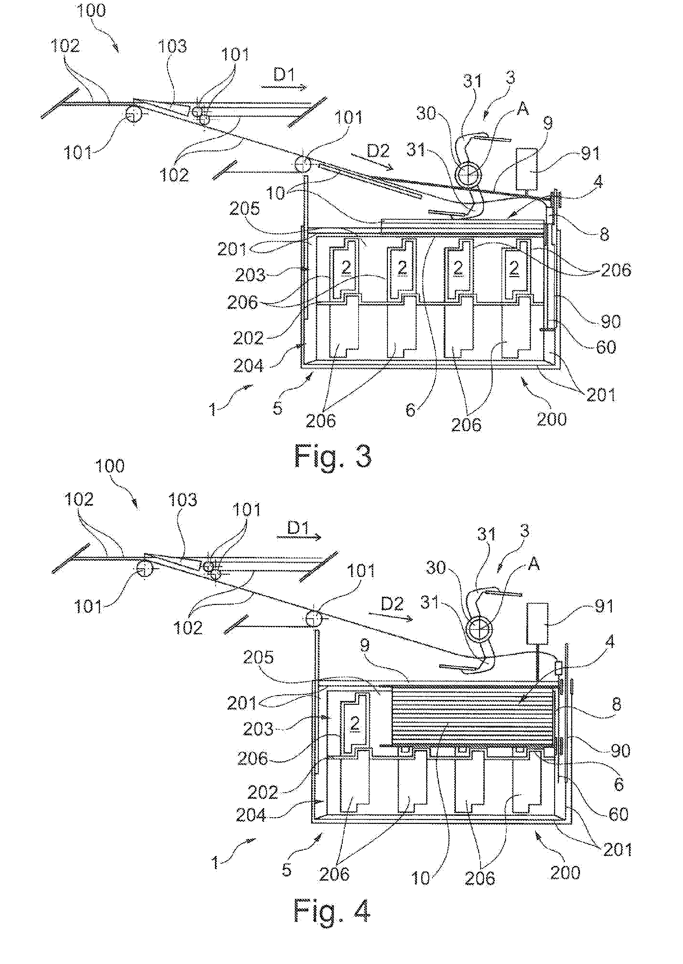

La zone d'empilage 4 est définie par l'actionneur 3, une rive de taquage 8 fixe, une palette mobile 6, et une surface d'appui. La rive de taquage 8 est prévue fixe par rapport au châssis, tangente à la trajectoire des ergots 31 de l'actionneur 3, sensiblement perpendiculaires aux directions principale D1 et secondaire D2, et en regard de l'arrivée selon la direction secondaire D2 des objets plats 10 à empiler. La palette mobile 6 est orientée parallèlement à la direction principale D1 et perpendiculairement à la rive de taquage 8. La palette mobile 6 est portée par une première tige de guidage 60 sensiblement perpendiculaire à la direction principale D1, et par rapport à laquelle elle peut translater entre une position de début d'empilage (visible sur les figures 1, 2) dans laquelle elle est proche de l'actionneur 3 et une position de fin d'empilage (visible sur la figure 4) dans laquelle elle est éloignée de l'actionneur 3 duquel elle est séparée par les objets plats 10 empilés entre elle et l'actionneur 3. La palette mobile 6 est par ailleurs sollicitée par des moyens de rappel (non représentés) tendant à la ramener vers sa position de début d'empilage. La zone d'empilage 4 est prévue au-dessus de la surface d'accueil 5. Ainsi, comme détaillé plus loin, lorsqu'un bac multi-compartiments 200 est posé sur la surface d'accueil 5, les objets plats 10 sont empilés au-dessus du premier, second compartiment 203, 204 auquel ils sont destinés, avant d'être chargés dans le bac multi-compartiments 200.

Les objets plats 10 qui suivent la direction secondaire D2 sont ainsi empilés au fur et à mesure de leur arrivée, dans la zone d'empilage 4. L'empilage provoque l'éloignement progressif de la palette mobile 6 par rapport à l'axe A de l'actionneur 3. Le dispositif d'empilage et de chargement automatique 1 comporte en outre un volet de plaquage 9 prévu en regard de la palette mobile 6, apte à coulisser par rapport à une seconde tige de guidage 90 sensiblement parallèle à la première tige de guidage 60 entre une position rétractée dans laquelle il est en retrait par rapport à la trajectoire des extrémités libres des ergots 31, et une position avancée dans laquelle il est proéminent dans la zone d'empilage 4 de sorte à pourvoir tasser la pile d'objets plats 10 contre la palette mobile 6. Comme illustré sur les figures, le volet de plaquage 9 est de plus légèrement pivotant pour pourvoir être mieux escamoté dans sa position rétractée. Le volet de plaquage 9 est déplacé de manière automatique, par exemple au moyen d'un actionneur 91.

Le dispositif d'empilage et de chargement automatique 1 comporte en outre une rangée de doigts mobiles 2 coulissant par rapport à la zone d'empilage 4 et par rapport à la surface d'accueil 5, et aptes à coulisser simultanément entre une position basse dans laquelle ils sont en retrait de la surface d'accueil 5 et une position haute dans laquelle leurs extrémités libres sont au-dessus de la surface d'accueil 5 et affleurent la zone d'empilage 4 pour définir la surface d'appui des objets plats 10 empilés sur chant dans la zone d'empilage 4. Les doigts mobiles 2 sont alignés entre eux sensiblement perpendiculairement à la rive de taquage 6. Les doigts mobiles 2 sont disposés de sorte que, lorsqu'un bac multi-compartiments 200 est placé sur la surface d'accueil 5, chaque doigt mobile 2 est en regard d'une fenêtre 206. Les doigts mobiles 2 ont des formes et dimensions leur permettant de traverser les fenêtres 206. Ainsi, dans leur position haute, les doigts mobiles 2 traversent le bac multi-compartiments 200 jusqu'à affleurer le haut des panneaux externes 201, la surface d'appui définie par leurs extrémités étant donc mobile entre la position haute dans laquelle elle sert de support aux objets plats 10 en cours d'empilage et la position basse dans laquelle les objets plats 10 ont leur chant en appui sur la plaque de fond 205, la surface d'appui accompagnant la descente des objets plats 10 dans le bac multi-compartiments 200 et permettant donc le chargement automatique du bac multi-compartiments 200.

La surface d'accueil 5 est mobile par rapport à la surface d'empilage 4 entre une première et une seconde positions de sorte à pouvoir déplacer le bac multi-compartiments 200 pour remplir successivement les premier et second compartiments 203, 204 du bac multi-compartiments 200. Pour ce faire, la surface d'accueil 5 est couplée avec tout moyen adapté (non représenté).

Selon une variante de réalisation non représentée, la surface d'accueil 5 est apte à recevoir plusieurs bacs multi-compartiments 200. Dans ce cas, outre la première et la seconde positions, la surface d'accueil sera également mobile entre la seconde position et une troisième position puis une quatrième position, les troisième et quatrième positions étant prévues pour placer les premier et second compartiments du second bac multi-compartiments en regard de la zone d'empilage et les doigts mobiles en regard des fenêtres successivement des premier et second compartiments du second bac multi-compartiments.

Selon une autre variante de réalisation, chaque bac multi-compartiments comporte un nombre de compartiments supérieurs, par exemple trois. Dans ce cas, la surface d'accueil sera prévue pour se déplacer entre une première, une seconde et une troisième position.

Le dispositif d'empilage et de chargement automatique 1 comporte une unité de commande (non représentée) apte à contrôler notamment le déplacement de la surface d'accueil 5, de la palette mobile 6, des doigts mobiles 2 et du volet de plaquage 9. L'unité de commande est paramétrée de sorte à contrôler ces déplacements en fonction notamment de la présence d'un bac multi-compartiments 200 sur la surface d'accueil 5 et d'un seuil d'empilage prédéterminé d'objets plats 10 dans la zone d"empilage 5. Ce seuil est modulé en fonction par exemple des dimensions du bac multi-compartiments 200 et de ses premier et second compartiments 203, 204. A cet effet, le dispositif d'empilage et de chargement automatique 1 comporte un détecteur (non représenté) apte à contrôler le seuil d'empilage au fur et à mesure de l'empilage et à déclencher, après cette détection, les déplacements requis pour la suite du procédé de chargement décrit plus loin.

Le dispositif d'empilage et de chargement automatique 1 peut également comporter des moyens d'approvisionnement automatique (non représentés) dudit bac multi-compartiments 200 vers ladite surface d'accueil 5 et/ou des moyens de retrait automatique (non représentés) dudit bac multi-compartiments 200 de la surface d'accueil 5.

Le procédé d'empilage et de chargement automatique d'objets plats 10 sur chant dans un bac multi-compartiments 200 selon l'invention, et mis en oeuvre au moyen d'un dispositif d'empilage et de chargement automatique 1 tel que décrit précédemment, est explicité ci-après.

En référence à la figure 1, le dispositif d'empilage et de chargement automatique 1 est à vide dans une position initiale. La surface d'accueil 5 est dans sa première position et apte à recevoir un bac multi-compartiments, les doigts mobiles 2 sont dans leur position basse, la zone d'empilage 5 est vide d'objets plats à empiler, la palette mobile 6 est dans sa position de début d'empilage et le volet de plaquage 9 est dans sa position rétractée.

En référence à la figure 2, on démarre le procédé et on réalise alors une étape d'approvisionnement au cours de laquelle on place un bac multi-compartiments 200 sur la surface d'accueil 5. Puis, au cours d'une première étape d'engagement, on translate les doigts mobiles 2 de sorte qu'ils traversent les fenêtres 206 du premier compartiment 203 puis affleure le haut du bac multi-compartiments 200 et la zone d'empilage 4, position haute dans laquelle leur translation est stoppée pour que les extrémités libres des doigts mobiles 2 définissent la surface d'appui sur laquelle vont être empilés les objets plats 10. La zone d'empilage 4 est toujours à vide, la palette mobile 6 dans sa position de début d'empilage, le volet de plaquage 9 dans sa position rétractée, la surface d'accueil 5 dans sa première position.

Ensuite, en référence à la figure 3, on réalise une première étape d'empilage au cours de laquelle, au moyen de l'actionneur 3, on empile des objets plats 10 sur chant sur la surface d'appui et contre la palette mobile 6. La zone d'empilage 4 est en cours de remplissage au-dessus du premier compartiment 203 du bac multi-compartiments 200. Les objets plats 10 sont ainsi empilés au fur et à mesure, la palette mobile 6 étant progressivement déplacée de sa position de début d'empilage vers sa position de fin d'empilage. Le volet de plaquage 9 reste dans sa position rétractée, la surface d'accueil 5 reste dans sa première position.

En référence à la figure 4, lorsque le détecteur a détecté que le seuil d'empilage a été atteint dans la zone d'empilage 4, l'empilage est interrompu, on vient tasser la pile d'objets plats 10 empilés contre la palette mobile 6 par déplacement et pivotement du volet de plaquage 9 vers la palette mobile 6 temporairement bloquée pour limiter les frottements, on réalise une première étape de chargement au cours de laquelle on rétracte progressivement les doigts mobiles 2 aux travers des fenêtres 206 de sorte à accompagner la descente des objets plats 10 dans le premier compartiment 203 jusqu'à ce que leur chant repose sur la plaque de fond 205.

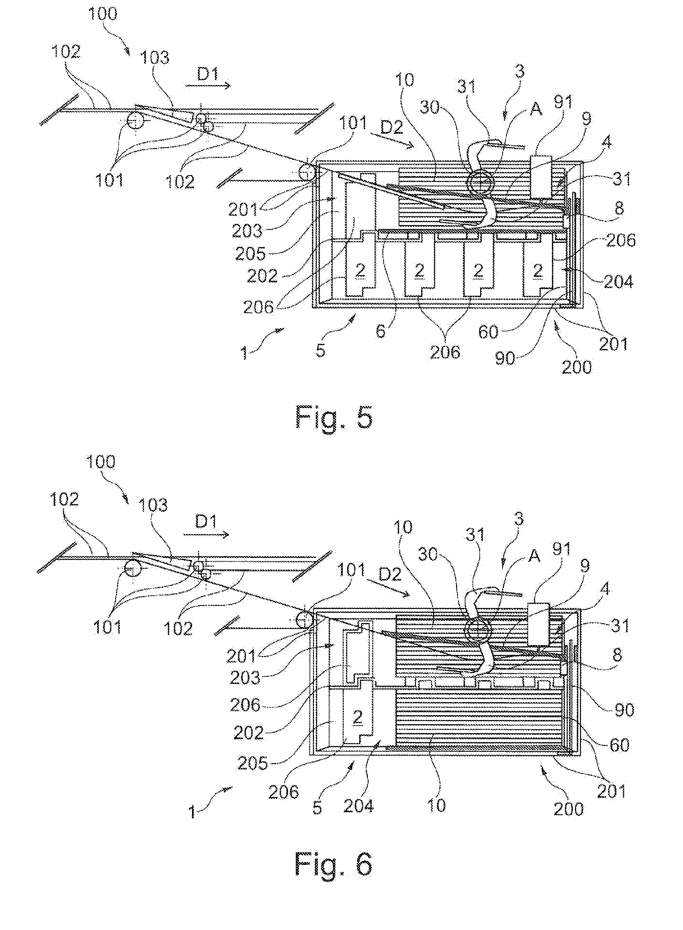

Ensuite, en référence à la figure 5, on réalise une étape de décalage au cours de laquelle on déplace la surface d'accueil 5 de sa première position à sa seconde position de sorte que les doigts mobiles 2 ne soient plus en regard des fenêtres 206 du premier compartiment 203 mais en regard des fenêtres 206 du second compartiment 204. On ramène le volet de plaquage 9 dans sa position escamotée et on réalise une seconde étape d'engagement au cours de laquelle on translate les doigts mobiles 2 de manière similaire à la première étape d'engagement, les doigts mobiles 2 traversant alors les fenêtres 206 du second compartiment 204 jusqu'à définir une surface d'appui au-dessus du second compartiment 204. La palette mobile 6 reste dans sa position de début d'empilage.

En référence à la figure 6, on réalise ensuite une seconde étape d'empilage similaire à la première étape d'empilage puis, lorsque le détecteur a de nouveau détecté le seuil d'empilage, on tasse la pile au moyen du volet de plaquage 9, on réalise une seconde étape de chargement, similaire à la première étape de chargement au cours de laquelle on rétracte progressivement les doigts mobiles 2 de sorte à accompagner la descente des objets plats 10 dans le second compartiment 204 jusqu'à ce que leur chant repose sur la plaque de fond 205 et on déplace le volet de plaquage 9 vers sa position escamotée.

Ensuite, on réalise une étape d'évacuation au cours de laquelle on retire de la surface d'accueil 5 le bac multi-compartiments 200 dont les premier et second compartiments 203, 204 ont été chargés par les objets plats 10 sur chant.

Le procédé d'empilage et de chargement automatique peut être poursuivi en chargeant un autre bac multi-compartiments 200. Pour ce faire, une première option consiste à recaler le dispositif d'empilage et de chargement automatique 1 dans sa position initiale et à répéter les étapes précédemment décrites. Selon une seconde option, on peut également utiliser le dispositif d'empilage et de chargement automatique 1 avec la surface d'accueil 5 dans sa seconde position pour commencer à charger le second compartiment 204 du nouveau bac multi-compartiments 200 puis à charger le premier compartiment 203 seulement après.

Le dispositif d'empilage et de déchargement automatique 1 et le procédé d'empilage et de chargement automatique selon l'invention permettent ainsi de charger de manière automatique des bacs multi-compartiments 200 avec des objets plats 10 empilés sur chant.

## Revendications

1. Dispositif d'empilage et de chargement automatique (1) d'objets plats (10) sur chant dans un bac multi-compartiments (200) comportant une plaque de fond (205) recevant le chant desdits objets plats (10) et traversée par au moins deux fenêtres (206) débouchant respectivement dans des premier et second compartiments (203, 204) dudit bac multi-compartiments (200), ledit dispositif d'empilage et de chargement automatique (1) comportant au moins une surface d'accueil (5) apte à recevoir au moins un bac multi-compartiments (200) à charger, une zone d'empilage (4) prévue au-dessus de ladite surface d'accueil (5) et apte à accueillir lesdits objets plats (10) au cours de leur empilage, un empileur (3) apte à empiler lesdits objets plats (10) sur chant dans ladite zone d'empilage (4), **caractérisé en ce qu'**il comporte au moins un doigt mobile (2) destiné à être en regard de l'une desdites fenêtres (206) d'un bac multi-compartiments (200) placé sur ladite surface d'accueil (5), ledit doigt mobile (2) étant mobile par rapport à ladite surface d'accueil (5) et à ladite zone d'empilage (4) entre une position basse dans laquelle son extrémité libre est en retrait de ladite surface d'accueil (5) et une position haute dans laquelle son extrémité libre affleure ladite zone d'empilage (4) et définit une surface d'appui des objets plats (10) apte à servir de support auxdits objets plats (10) lors de leur empilage, **en ce que** ladite surface d'accueil (5) est mobile par rapport audit doigt mobile (2) entre une première et une seconde positions dans lesquelles ledit doigt mobile (2) est destiné à être successivement en regard de la fenêtre (206) dudit premier compartiment (203) puis de la fenêtre (206) dudit second compartiment (204).

2. Dispositif d'empilage et de chargement automatique (1) selon la revendication précédente, **caractérisé en ce qu'**il comporte au moins un détecteur apte à contrôler le seuil d'empilage d'objets plats (10) dans ladite zone d'empilage (4) et à commander les déplacements dudit doigt mobile (2) et de ladite surface d'accueil (5) lorsqu'une valeur de seuil prédéterminée a été atteinte.

3. Dispositif d'empilage et de chargement automatique (1) selon au moins l'une des revendications précédentes, **caractérisé en ce qu'**il comporte une rangée de doigts mobiles (2) agencés pour se déplacer simultanément entre lesdites positions basse et haute.

4. Dispositif d'empilage et de chargement automatique (1) selon au moins l'une des revendications précédentes, **caractérisé en ce que** ledit empileur (3) est un actionneur rotatif de type roue à godet et **en ce que** ledit dispositif d'empilage et de chargement automatique (1) comporte au moins une palette mobile (6) prévue en regard dudit empileur (3) et apte à recevoir l'appui de la face aval du premier objet plat (10) empilé sur ladite zone d'empilage (4) et à s'éloigner dudit empileur (3) au fur et à mesure de l'empilage desdits objets plats (10) à l'arrière dudit premier objet plat (10).

5. Dispositif d'empilage et de chargement automatique (1) selon au moins l'une des revendications précédentes, **caractérisé en ce qu'**il comporte des moyens d'approvisionnement automatique dudit bac multi-compartiments (200) vers ladite surface d'accueil (5).

6. Dispositif d'empilage et de chargement automatique (1) selon au moins l'une des revendications précédentes, **caractérisé en ce qu'**il comporte des moyens de retrait automatique dudit bac multi-compartiments (200) de ladite surface d'accueil (5).

7. Machine de tri (100) d'objets plats (10) comportant au moins un dépileur, des moyens de convoyage (101, 102, 103), des sorties de tri dans lesquelles lesdits objets plats (10) sont destinés à être répartis selon un plan de tri prédéterminé, un dispositif d'empilage et de chargement desdits objets plats (10) sur chant au niveau desdites sorties de tri, **caractérisé en ce qu'**elle comporte au moins un dispositif d'empilage et de chargement automatique (1) selon au moins l'une quelconque des revendications précédentes.

8. Procédé d'empilage et de chargement automatique d'objets plats (10) sur chant dans un bac multi-compartiments (200) comportant une plaque de fond (205) recevant le chant desdits objets plats (10) et traversée par au moins deux fenêtres (206) débouchant respectivement dans des premier et second compartiments (203, 204) dudit bac multi-compartiments (200), **caractérisé en ce qu'**il comporte au moins :
- une étape d'approvisionnement au cours de laquelle on place au moins un bac multi-compartiments (200) sur une surface d'accueil (5) de sorte qu'un doigt mobile se trouve en regard de la fenêtre (206) dudit premier compartiment (203),
- une première étape d'engagement au cours de laquelle on engage au moins un doigt mobile (2) dans ledit bac multi-compartiments (200) au travers de la fenêtre (206) dudit premier compartiment (203) de sorte que son extrémité libre définisse, au-dessus de ladite surface d'accueil (5), une surface d'appui apte à recevoir lesdits objets plats (10) empilés sur chant,
- une première étape d'empilage au cours de laquelle on empile lesdits objets plats (10) sur chant sur ladite surface d'appui,
- une première étape de chargement au cours de laquelle on rétracte ledit doigt mobile (2) dudit premier compartiment (203) de sorte que le chant desdits objets plats (10) repose sur ladite plaque de fond (205),
- une étape de décalage au cours de laquelle on déplace ledit bac multi-compartiments (200) de sorte que ledit doigt mobile (2) soit en regard de la fenêtre dudit second compartiment (204),
- une seconde étape d'engagement au cours de laquelle on engage le même doigt mobile (2) que celui utilisé lors de ladite première étape d'engagement, au travers de ladite fenêtre dudit second compartiment (204) de sorte que son extrémité libre définisse, au-dessus de ladite surface d'accueil (5), la même surface d'appui que lors de ladite première étape d'engagement,
- une seconde étape d'empilage similaire à ladite première étape d'empilage,
- une seconde étape de chargement au cours de laquelle on rétracte ledit doigt mobile (2) dudit second compartiment (204) de sorte que le chant desdits objets plats (10) repose sur ladite plaque de fond (205),
- une étape d'évacuation dudit bac multi-compartiments (200) de ladite surface d'accueil (5).

9. Procédé d'empilage et de chargement automatique selon la revendication précédente, **caractérisé en ce qu'**avant la mise en oeuvre dudit procédé d'empilage et de chargement, on fixe au moins une valeur de seuil prédéterminée en fonction des dimensions dudit bac multi-compartiments (200), et **en ce qu'**au cours d'au moins l'une desdites première et seconde étapes d'empilage, on compare le niveau d'empilage d'objets plats (10) avec ledit seuil d'empilage et que, lorsque ledit niveau d'empilage atteint ladite valeur de seuil prédéterminée, on commande successivement ladite première étape de chargement, ladite seconde étape de chargement et ladite étape de décalage.

10. Procédé de tri postal au cours duquel on réalise au moins des étapes de déchargement d'objets plats (10) empilés sur chant d'un bac multi-compartiments (200), de dépilage desdits objets plats (10), de tri desdits objets plats (10), d'empilage desdits objets plats (10), et de chargement desdits objets plats (10) dans au moins un bac multi-compartiments (200), **caractérisé en ce que** l'on réalise lesdites étapes d'empilage et de chargement selon ledit procédé d'empilage et de chargement des revendications 8 et 9.

## Patentansprüche

1. Vorrichtung zum automatischen Stapeln und Laden (1) von flachen Gegenständen (10) hochkant in einem Multi-Kammer-Behälter (200), umfassend eine Bodenplatte (205), die die Kante der flachen Gegenstände (10) aufnimmt und durch mindestens zwei Fenster (206) durchbrochen ist, die in erste bzw. zweite Kammern (203, 204) des Multi-Kammer-Behälters (200) münden, wobei die Vorrichtung zum automatischen Stapeln und Laden (1) mindestens eine Aufnahmefläche (5), die geeignet ist, um mindestens einen zu beladenden Multi-Kammer-Behälter (200) aufzunehmen, eine Stapelzone (4), die über der Aufnahmefläche (5) vorgesehen, und geeignet ist, um die flachen Gegenstände (10) während ihres Stapelns aufzunehmen, eine Stapeleinrichtung (3), die geeignet ist, um die flachen Gegenstände (10) hochkant in der Stapelzone (4) zu stapeln, umfasst, **dadurch gekennzeichnet, dass** sie mindestens einen beweglichen Finger (2) umfasst, der dazu bestimmt ist, gegenüber einem der Fenster (206) eines Multi-Kammer-Behälters (200), der auf der Aufnahmefläche (5) angeordnet ist, angeordnet zu sein, wobei der bewegliche Finger (2) in Bezug zur Aufnahmefläche (5) und zur Stapelzone (4) zwischen einer unteren Position, in der sein freies Ende zur Aufnahmefläche (5) zurückgesetzt ist, und einer oberen Position, in der sein freies Ende an die Stapelzone (4) grenzt und eine Auflagefläche für die flachen Gegenstände (10) definiert, die geeignet ist, als Träger für die flachen Gegenstände (10) bei ihrem Stapeln zu dienen, beweglich ist, und dass die Auflagefläche (5) in Bezug zu dem beweglichen Finger (2) zwischen einer ersten und einer zweiten Position beweglich ist, in denen der bewegliche Finger (2) dazu bestimmt ist, nacheinander gegenüber dem Fenster (206) der ersten Kammer (203) und dann gegenüber dem Fenster (206) der zweiten Kammer (204) angeordnet zu werden.

2. Vorrichtung zum automatischen Stapeln und Laden (1) nach dem vorhergehenden Anspruch, **dadurch gekennzeichnet, dass** sie mindestens einen Detektor umfasst, der geeignet ist, um die Stapelgrenze von flachen Gegenständen (10) in der Stapelzone (4) zu kontrollieren und die Bewegungen des beweglichen Fingers (2) und der Aufnahmefläche (5) zu steuern, wenn ein vorbestimmter Grenzwert erreicht wurde.

3. Vorrichtung zum automatischen Stapeln und Laden (1) nach mindestens einem der vorhergehenden Ansprüche, **dadurch gekennzeichnet, dass** sie eine Reihe von beweglichen Fingern (2) umfasst, die derart angeordnet sind, dass sie sich gleichzeitig zwischen den unteren und oberen Positionen bewegen.

4. Vorrichtung zum automatischen Stapeln und Laden (1) nach mindestens einem der vorhergehenden Ansprüche, **dadurch gekennzeichnet, dass** die Stapeleinrichtung (3) ein drehbares Betätigungselement vom Typ Schaufelrad ist, und dass die Vorrichtung zum automatischen Stapeln und Laden (1) mindestens eine bewegliche Platte (6) umfasst, die gegenüber der Stapeleinrichtung (3) vorgesehen und dazu geeignet ist, die Auflage der stromabwärtigen Seite des ersten flachen Gegenstandes (10), der auf die Stapelzone (4) gestapelt ist, aufzunehmen und sich von der Stapeleinrichtung (3) im Zuge des Stapelns der flachen Gegenstände (10) hinter dem ersten flachen Gegenstand (10) zu entfernen.

5. Vorrichtung zum automatischen Stapeln und Laden (1) nach mindestens einem der vorhergehenden Ansprüche, **dadurch gekennzeichnet, dass** sie Mittel zur automatischen Zuführung des Multi-Kammer-Behälters (200) zu der Aufnahmefläche (5) umfasst.

6. Vorrichtung zum automatischen Stapeln und Laden (1) nach mindestens einem der vorhergehenden Ansprüche, **dadurch gekennzeichnet, dass** sie Mittel zur automatischen Entnahme des Multi-Kammer-Behälters (200) von der Aufnahmefläche (5) umfasst.

7. Maschine (100) zum Sortieren von flachen Gegenständen (10), umfassend mindestens einen Belader, Fördermittel (101, 102, 103), Sortierausgänge, in die die flachen Gegenstände (10) nach einem vorbestimmten Sortierplan verteilt werden sollen, eine Vorrichtung zum Stapeln und Laden der flachen Gegenstände (10) hochkant im Bereich der Sortierausgänge, **dadurch gekennzeichnet, dass** sie mindestens eine Vorrichtung (1) zum automatischen Stapeln und Laden nach mindestens einem der vorhergehenden Ansprüche umfasst.

8. Verfahren zum automatischen Stapeln und Laden von flachen Gegenständen (10) hochkant in einem Multi-Kammer-Behälter (200), umfassend eine Bodenplatte (205), die die Kante der flachen Gegenstände (10) aufnimmt und durch mindestens zwei Fenster (206) durchbrochen ist, die in erste bzw. zweite Kammern (203, 204) des Multi-Kammer-Behälters (200) münden, **dadurch gekennzeichnet, dass** es mindestens umfasst:
- einen Zuleitungsschritt, während dessen mindestens ein Multi-Kammer-Behälter (200) auf einer Aufnahmefläche (5) derart angeordnet wird, dass sich ein beweglicher Finger gegenüber dem Fenster (206) der ersten Kammer (203) befindet,
- einen ersten Schritt des Eingreifens, während dessen mindestens ein beweglicher Finger (2) in den Multi-Kammer-Behälter (200) durch das Fenster (206) der ersten Kammer (203) eingreift, so dass sein freies Ende über der Aufnahmefläche (5) eine Stützfläche definiert, die geeignet ist, die hochkant gestapelten flachen Gegenstände (10) aufzunehmen,
- einen ersten Stapelschritt, während dessen die flachen Gegenstände (10) hochkant auf der Stützfläche gestapelt werden,
- einen ersten Ladeschritt, während dessen der bewegliche Finger (2) aus der ersten Kammer (203) zurückgezogen wird, so dass die Kante der flachen Gegenstände (10) auf der Bodenplatte (205) aufliegt,
- einen Versetzungsschritt, während dessen der Multi-Kammer-Behälter (200) verschoben wird, so dass der bewegliche Finger (2) gegenüber dem Fenster der zweiten Kammer (204) angeordnet ist,
- einen zweiten Schritt des Eingreifens, während dessen derselbe bewegliche Finger (2) wie jener, der beim ersten Schritt des Eingreifens verwendet wurde, durch das Fenster der zweiten Kammer (204) eingreift, so dass sein freies Ende über der Aufnahmefläche (5) dieselbe Stützfläche wie beim ersten Schritt des Eingreifens definiert,
- einen zweiten Stapelschritt ähnlich dem ersten Stapelschritt,
- einen zweiten Ladeschritt, während dessen der bewegliche Finger (2) aus der zweiten Kammer (204) zurückgezogen wird, so dass die Kante der flachen Gegenstände (10) auf der Bodenplatte (205) aufliegt,
- einen Schritt der Entfernung des Multi-Kammer-Behälters (200) von der Aufnahmefläche (5).

9. Verfahren zum automatischen Stapeln und Laden nach dem vorhergehenden Anspruch, **dadurch gekennzeichnet, dass** vor dem Einsatz des Verfahrens zum Stapeln und Laden mindestens ein vorbestimmter Grenzwert in Abhängigkeit von den Abmessungen des Multi-Kammer-Behälters (200) festgelegt wird, und dass während mindestens eines der ersten und zweiten Stapelschritte die Stapelhöhe von flachen Gegenständen (10) mit der Stapelgrenze verglichen wird, nacheinander der erste Ladeschritt, der zweite Ladeschritt und der Schritt des Versetzens gesteuert werden.

10. Postsortierverfahren, während dessen mindestens Schritte des Entladens von hochkant gestapelten flachen Gegenständen (10) aus einem Multi-Kammer-Behälter (200), des Entstapelns der flachen Gegenstände (10), des Sortierens der flachen Gegenstände (10), des Stapelns der flachen Gegenstände (10) und des Ladens der flachen Gegenstände (10) in mindestens einen Multi-Kammer-Behälter (200) durchgeführt werden, **dadurch gekennzeichnet, dass** die Schritte des Stapelns und Ladens nach dem Verfahren zum Stapeln und Laden der Ansprüche 8 und 9 durchgeführt werden.

## Claims

1. Apparatus (1) for automatically stacking flat articles (10) on edge and for automatically loading them on edge into a multi-compartment tray (200) having a bottom plate (205) receiving the edges of said flat articles (10) and provided with at least two through windows (206) opening out into respective ones of first and second compartments (203, 204) of said multi-compartment tray (200), said automatic stacking and loading apparatus (1) having at least one tray-receiving surface (5) suitable for receiving at least one multi-compartment tray (200) to be loaded, a stacking zone (4) provided above said tray-receiving surface (5) and suitable for receiving said flat articles (10) while they are being stacked, and a stacker (3) suitable for stacking said flat articles (10) on edge in said stacking zone (4), said apparatus being **characterized in that** it has at least one moving finger (2) designed to be in register with one of said windows (206) in a multi-compartment tray (200) placed on said tray-receiving surface (5), said moving finger (2) being mounted to move relative to said tray-receiving surface (5) and to said stacking zone (4) between a low position in which its free end is set back from said tray-receiving surface (5) and a high position in which its free end is flush with said stacking zone (4) and defines a bearing surface for the flat articles (10) that serves as a support for said flat articles (10) while they are being stacked, **in that** said tray-receiving surface (5) is mounted to move relative to said moving finger (2) between a first position and a second position, in which positions said moving finger (2) is designed to be successively in register with the window (206) of said first compartment (203) and then in register with the window (206) of said second compartment (204).

2. Automatic stacking and loading apparatus (1) according to the preceding claim, **characterized in that** it has at least one detector suitable for monitoring the stacking threshold for stacking of flat articles (10) in said stacking zone (4) and for controlling the movements of said moving finger (2) and of said tray-receiving surface (5) once a predetermined threshold value has been reached.

3. Automatic stacking and loading apparatus (1) according to any preceding claim, said apparatus being **characterized in that** it has a row of moving fingers (2) arranged to move simultaneously between said low and high positions.

4. Automatic stacking and loading apparatus (1) according to any preceding claim, **characterized in that** said stacker (3) is a rotary actuator of the bucket wheel type, and **in that** said automatic stacking and loading apparatus (1) has at least one moving paddle (6) provided facing said stacker (3) and suitable for receiving in abutment the downstream face of the first flat article (10) stacked in said stacking zone (4), and for moving away from said stacker (3) as said flat articles (10) are stacked behind said first flat article (10).

5. Automatic stacking and loading apparatus (1) according to any preceding claim, **characterized in that** it has automatic supply means for automatically supplying said multi-compartment tray (200) to said tray-receiving surface (5).

6. Automatic stacking and loading apparatus (1) according to any preceding claim, **characterized in that** it has automatic removal means for automatically removing said multi-compartment tray (200) from said tray-receiving surface (5).

7. A sorting machine (100) for sorting flat articles (10), the machine including at least one unstacker, conveyor means (101, 102, 103), sorting outlets into which said flat articles (10) are to be distributed in compliance with a predetermined sorting plan, and apparatus for stacking and loading flat articles (10) on edge at said sorting outlets, said sorting machine being **characterized in that** it includes at least one automatic stacking and loading apparatus (1) according to any preceding claim.

8. A method of automatically stacking flat articles (10) on edge and of automatically loading them on edge into a multi-compartment tray (200) having a bottom plate (205) receiving the edges of said flat articles (10) and provided with at least two through windows (206) opening out into respective ones of first and second compartments (203, 204) of said multi-compartment tray (200), said method being **characterized in that** it comprises at least:
• a supply step during which at least one multi-compartment tray (200) is placed on a tray-receiving surface (5) so that a moving finger is in register with the window (206) in said first compartment (203);
• a first engagement step during which at least one moving finger (2) is engaged into said multi-compartment tray (200) through the window (206) in said first compartment (203) so that, above said tray-receiving surface (5), said finger defines a bearing surface suitable for receiving said flat articles (10) stacked on edge;
• a first stacking step during which said flat articles (10) are stacked on edge on said bearing surface;
• a first loading step during which said moving finger (2) is retracted from said first compartment (203) so that the edges of said flat articles (10) are resting on said bottom plate (205);
• a shift step during which said multi-compartment tray (200) is moved so that said moving finger (2) is in register with the window in said second compartment (204) ;
• a second engagement step during which the same moving finger (2) as the one used during said first engagement step is engaged through said window in said second compartment (204) so that, above said tray-receiving surface (5), the free end of said finger defines the same bearing surface as during said first engagement step;
• a second stacking step similar to said first stacking step;
• a second loading step during which said moving finger (2) is retracted from said second compartment (204) so that the edges of said flat articles (10) are resting on said bottom plate (205); and
• a removal step during which said multi-compartment tray (200) is removed from said tray-receiving surface (5).

9. An automatic stacking and loading method according to the preceding claim, **characterized in that**, prior to implementing said stacking and loading method, at least one predetermined threshold value is set as a function of the dimensions of said multi-compartment tray (200), **in that**, during at least one of said first and second stacking steps, the level of stacking of flat articles (10) is compared with said stacking threshold, and **in that**, when said level of stacking reaches said predetermined threshold value, said first loading step, said second loading step, and said shift step are caused to take place in succession.

10. A postal sorting method during which at least one of the following steps is performed: unloading flat articles (10) stacked on edge from a multi-compartment tray (200); unstacking said flat articles (10), sorting said flat articles (10), stacking said flat articles (10), and loading said flat articles (10) into a multi-compartment tray (200), said postal sorting method being **characterized in that** said stacking and loading steps are performed as in said stacking and loading method of claims 8 and 9.
